Europäisches Patentamt

European Patent Office

Office européen des brevets

(19)

(11) Veröffentlichungsnummer: **0 267 284**
A1

(12)

# EUROPÄISCHE PATENTANMELDUNG
Veröffentlicht nach Art. 158 Abs. 3 EPÜ

(21) Anmeldenummer: 86904470.1

(22) Anmeldetag: 30.04.86

Daten der zugrundeliegenden internationalen Anmeldung:

(86) Internationale Anmeldenummer:
PCT/SU86/00044

(87) Internationale Veröffentlichungsnummer:
WO87/06704 (05.11.87 87/24)

(51) Int. Cl.³: **G 01 N 29/04**

(43) Veröffentlichungstag der Anmeldung:
18.05.88 Patentblatt 88/20

(84) Benannte Vertragsstaaten:
AT DE FR GB IT NL SE

(71) Anmelder: VSESOJUZNY
NAUCHNO-ISSLEDOVATELSKY INST. PO
STROITELSTVU MAGISTRALNYKH TRUBOPROVODOV
Okruzhnoi proezd, 19
Moscow, 105058(SU)

(72) Erfinder: FALKEVICH, Sergei Alexandrovich
ul. 5-aya Parkovaya, 52-31
Moscow, 105264(SU)

(72) Erfinder: NAUMOV, Mikhail Viktorovich
Sirenevy bulvar, 52-143
Moscow, 105484(SU)

(72) Erfinder: SHKARLET, Jury Mikhailovich
Lefortovsky val, 12-40
Moscow, 111116(SU)

(72) Erfinder: SUKHORUKOV, Dmitry Vasilievich
ul. 2-ya Vladimirskaya, 50-2-51
Moscow, 111394(SU)

(72) Erfinder: FEDOTOV, Viktor Nikolaevich
ul. Lenina, 6a-8 Moskovskaya obl.
Klimovsk, 141000(SU)

(72) Erfinder: SAZONOV, Jury Ivanovich
Likhachevskoe shosse, 10-189 Moskovskaya obl.
Dolgoprudny, 141700(SU)

(74) Vertreter: Ebbinghaus, Dieter et al,
v. FÜNER, EBBINGHAUS, FINCK Postfach 95 01 60
D-8000 München 95(DE)

(54) ULTRASCHALL-FEHLSTELLENDETEKTOR.

(57) Das Ultraschalldefektoskop weist einen Sendekanal und einen Empfangskanal für elektrische Signale auf. Der Sendekanal enthält einen Synchronisierimpulsgenerator (1), angeschlossen an einen Suchimpulsgenerator (2), und Sendepiezoelemente (3). Der Empfangskanal enthält Empfangspiezoelemente (4), einen HF-Impulsverstärker (6), einen Videodetektor (7), einen Steuerspannungsgenerator (15) und mit einem Frequenzteiler (13) verbundene Zeilen- und Bildablenkgeneratoren (16 bzw. 15). An den Ausgang des Videoverstärkers ist ein Multivibrator (10) angeschlossen. Der Empfangskanal weist auch drei elektronische Schalter (11, 12 und 5) auf.

FIG.1

# ULTRASCHALLDEFEKTOSKOP

## Gebiet der Technik

Die Erfindung bezieht sich auf Mittel zur Untersuchung bzw. Prüfung von Erzeugnissen mit Hilfe von Ultraschallschwingungen und betrifft insbesondere einen Ultraschalldefektoskop.

## Stand der Technik

Es ist ein Ultraschalldefektoskop bekannt, das einen Synchronosierimpulsgenerator aufweist, der mit einem Suchimpulsgenerator verbunden ist, dessen Ausgang mit einem Piezoelement verbunden ist und der Ausgang dieses letzteren über einen HF-Impulsverstärker, einen Videodetektor und einen Videoverstärker, welche in Reihe geschaltet sind, an eine Registriereinrichtung angeschlossen ist. (siehe A.K.Gurvich, I.N.Jermolov "Ultraschallkontrolle von Schweißnähten", Verlag Tekhnika, Kiew, 1972, S.424).

Das Piezoelement dieser Vorrichtung erfüllt sowohl die Funktion eines Strahlers, als auch die eines Empfängers der Ultraschallsignale.

Die Durchschallung des ganzen zu prüfenden Querschnitts erfolgt mittels einer mechanischen Längs- und Querbewegung des Suchers, während die Prüfergebnisse mit Hilfe eines Schreibers aufgezeichnet werden.

Dabei ist die Prüfungsgeschwindigkeit durch die Geschwindigkeit der mechanischen Bewegung des Suchers und die Notwendigkeit der Sicherstellung eines zuverlässigen akustischen Kontaktes zwischen dem Sucher und der Oberfläche des Prüf begrenzt. Dies senkt die Produktivität der bekannten Vorrichtung. Darüber hinaus wird die Sicherheit der Prüfergebnisse bei jeder Störung des akustischen Kontaktes wesentlich beeinträchtigt.

Es ist weiterhin ein Ultraschalldefektoskop bekannt, das einen Sendekanal und einen Empfangskanal mit Piezoelementen aufweist und mit einem zwischen den Piezoelementen und dem Ausgang eines HF-Impulsverstärkers geschalteten Umschaltblock für die Piezoelemente versehen ist sowie einen mit diesem verbundenen Steuerblock enthält. Die genannten Blöcke übernehmen das Schalten der Gruppen der Piezoelemente, die an den Eingang des HF-Impulsverstärkers angeschlossen werden. Dadurch wird die Ultraschallstrahlabtastung längs des Piezowandlers ermöglicht. Der Block kann auf Basis eines Multivibrators und elektronischer Schalter realisiert werden (siehe z.B. die DE-PS Nr.2243435, Int.Cl.G 01 N 29/04, "Listes", Nr. 14, 04.04. 1975, Krautkrämer GmbH).

Der Nachteil dieser Aordnung besteht darin, daß die Abtastung nur längs des Piezowandlers gewährleistet ist und nicht in der senkrecht dazu stehenden Ebene möglich ist, was die Leistung der Prüfung im ganzen herabsetzt.

Außerdem wird durch Vorhandensein der in konstruktiver und funktioneller Hinsicht komplizierten Umschalt- und Steuerblöcke die Zuverlässigkeit der Anordnung im ganzen sowie die Sicherheit der Prüfergebnisse erniedrigt.

Weiterhin ist ein Ultraschalldefektoskop bekannt, das einen Sendekanal und einen Empfangskanal für elektrische Signale enthält. Der Sendekanal enthält einen Synchronisierimpulsgenerator, dessen Eingang an einen Suchimpulsgenerator angeschlossen ist, der seinerseits mit Sendepiezoelementen verbunden ist.

Der Empfangskanal enthält Empfangspiezoelemente und- in Reihenschaltung- einen HF-Impulsverstärker, einen Videoverstärker und eine Registriereinrichtung. Diese Kette ist an einen Steuerspannungsgenerator angeschlossen und mit den Empfangspiezoelementen verbunden.

Der Synchronisierimpulsgenerator ist mit einem Zeilenablenkgenerator verbunden, der auch an einen mit seinem Ausgang an einen Bildablenkgenerator angeschalteten Frequenzteiler angeschlossen ist (siehe z.B. den UdSSR-Urheberschein Nr 463060, Int. Cl. G 01 N 29/04, bekanntgegeben im Patentblatt "Entdeckungen, Erfindungen, Geschmacksmuster, Warenzeichen", Nr 9, 1975,W.P.Aksenov und I.S.Popov, Moskovsky ordena Lenina energetichesky Institut).

- 3 -

Die Empfangspiezoelemente sind voneinander in einem Abstand angeordnet, der kleiner als die oder gleich der Ultraschallwellenlänge ist.

Die Durchschallung des zu prüfenden Querschnitts mit Hilfe dieser bekannten Anordnung erfolgt mit einem schmalen Abtaststrahl durch Phasenänderung der Ultraschallschwingungen an den Empfangpiezoelementen, dann werden reflektierte Echo-Signale empfangen, nach denen man die Qualität des Erzeugnisses beurteilt. Die Annordnung gestattet die Registrierung der Fehlerparameter in der Abtastebene, dabei wird die Registrierung ständig während der ganzen Prüfperiode durchgeführt.

Der Nachteil dieses Defektoskops ist eine geringe Leistung, die darauf zurückzuführen ist, daß die Prüfergebnisse auch bei Ausbleiben von Fehlern registriert werden, d.h. die Leistung der Prüfung bei dem bekannten Defektoskop wird durch die Aufzeichnungsgeschwindigkeit der Prüfergebnisse bestimmt, wobei die Aufzeichnung wie gesagt kontinuierlich und über den gesamten zu prüfenden Bereich durchgeführt wird unabhängig davon, ob ein Fehler vorliegt oder nicht.

Außerdem führen die Trägheit der Registriereinrichtung in Verbindung mit der hohen Geschwindigkeit der Ultraschallstrahlabtastung unvermeidlich zum Verpassen von Fehlern, wodurch die Sicherheit der Prüfergebnisse im ganzen vermindert wird.

Ein anderer Umstand, der die Sicherheit der Prüfung bei den bekannten Defektoskopen vermindert, ist die Empfindlichkeitsänderung der Sende- und der Empfangspiezoelemente im Betriebszustand der elektrischen Abtastung. Diese Änderung hängt mit der Verminderung der Projektion der Piezoelemente auf die zum Ultraschallstrahl senkrecht stehende Ebene, welche Verminderung dem Wert cos $\theta$ proportional ist, wo $\theta$ den Neigungswinkel des Ultraschallstrahls gegenüber der Normalen zu den Piezoelementen bedentet, sowie mit den gegenseitigen Verbindungen zwischen den Piezoelementen zusammen (siehe Defektoskopie, Nr. 4, 1979, Moskau, S.A.Falkevitch "Untersuchung des linearen Gitters von Piezovibratoren unter elektrischer Abtastung", S.60 bis 66).

Offenbarung der Erfindung

Der Erfindung liegt die Aufgabe zugrunde, ein Ultraschalldefektoskop anzugeben, bei dem durch Änderung der Durchschallungsbedingungen und durch Registrierung des Fehlers erst nach Ankunft des Echo-Impulses die Zuverlässigkeit der Fehlerprüfung des Erzeugnises gesteigert ist.

Diese Aufgabe wird dadurch gelöst, daß in einem Ultraschalldefektoskop, bei dem der Sendekanal für elektrische Signale einen Synchronisierimpulsgenerator enthält, der an einen Suchimpulsgenerator angeschlossen ist, welcher mindestens mit einem Sendepiezoelement verbunden ist, und der Empfangskanal für elektrische Signale mindestens zwei Empfangspiezoelemente, die voreinander in einem Abstand angeordnet sind, der kleiner als die oder gleich der Ultraschallwellenlänge ist, und - in Reihe geschaltet - einen HF-Impulsverstärker, einen Videodetektor, einen Videoverstärker und eine Registriereinrichtung, welche mit einem Steuerspannungsgenerator verbunden und mit den Empfangspiezoelementen gekoppelt sind, sowie einen Zeilenablenkgenerator enthält, der mit dem Synchronisierimpulsgenerator und mit einem Frequenzteiler verbunden ist, wobei der Ausgang dieses letzteren an einen Bildablenkgenerator angeschlossen ist, erfindungsgemäß der Empfangskanal für elektrische Signale einen Multivibrator, dessen Eingang mit dem Ausgang des Videoverstärkers verbunden ist, einen ersten elektronischen Schalter, dessen Steuereingang mit dem ersten Ausgang des Multivibrators, dessen Ausgang mit dem Frequenzteiler und dessen Eingang mit dem Steuerspannungsgenerator verbunden ist, einen zweiten elektronischen Schalter, dessen Steuereingang mit dem ersten Ausgang des Multivibrators, dessen Eingang mit dem Ausgang des Sendepiezoelementes und dessen Ausgang an mit dem Eingang des HF-Impulsverstärkers verbunden ist, und einen dritten elektronischen Schalter, dessen Steuereingang an den zweiten Ausgang des Multivibrators, dessen Eingang an den Ausgang des Empfangspiezoelementes und dessen Ausgang an den HF-Impulsverstärker geschaltet ist.

Das Defektoskop kann zweckmäßigerweise eine Ausgleichschaltung für die Empfindlichkeit der Ultraschallkontrolle enthalten, deren Eingang mit dem Ausgang des Videodetektors und deren Ausgang mit dem Eingang des Videoverstärkers und deren Steuereingang mit dem Ausgang des Steuerspannungsgenerators verbunden sind.

Kurze Beschreibung der Zeichnungen

Im nachfolgenden wird die Erfindung an Hand der Ausführungsbeispiele und der beiliegenden Zeichnungen näher erläutert. In den Zeichnungen zeigt

Fig.1 das Strukturschema für ein erhindungsgemäßes Ultraschalldefektoskop;

Fig.2 den Schaltplan eines Empfangskanals für elektrische Signale des erfindungsgemäßen Ultraschalldefektoskops;

Fig.3 ein Richtdiagramm für die Sende- und die Empfangspiezoelemente des erfindungsgemäßen Ultraschalldefektoskops

Beste Ausführungsform der Erfindung

Das Ultraschalldefektoskop, dessen Funktion auf dem Prinzip der Ultraschallstrahlabtastung beruht, weist einen Sendekanal und einen Empfangskanal für elektrische Signale auf.

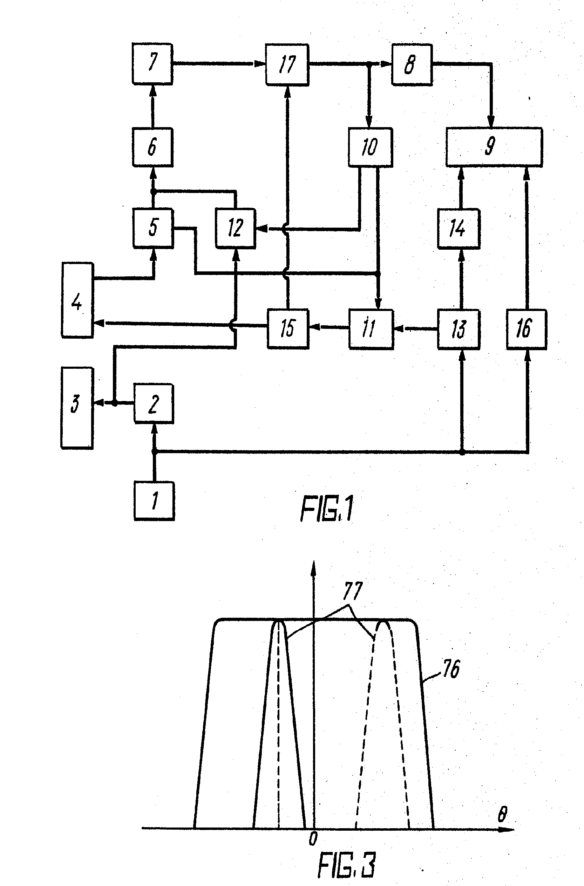

Der Sendekanal für elektrische Signale enthält einen Synchronisierimpulsgenerator 1 (Fig.1), der an einen Suchimpulsgenerator 2 angeschlossen ist, und mindestens ein Sendepiezoelement 3. Die Anzahl der Sendepiezoelemente 3 wird ausgehend von der Größe des Sektors der elektrischen Abtastung gewählt und sie ist praktisch nicht größer als 10.

Der Empfangskanal für elektrische Signale enthält mindestens zwei Empfangspiezoelemente 4, die voneinander in einem Abstand liegen, der kleiner als die oder gleich der Ultraschallwellenlänge ist. Ihre Anzahl wird ausgehend von der erforderlichen Winkelauflösung sowie von der Prüfobjektdicke gewählt, und sie ist praktisch nicht größer als 100.

Der Ausgang des letzteren Piezoelementes 4 ist mit dem Eingang eines elektronischen Schalters 5 verbunden, dessen Ausgang an einen HF-Impulsverstärker 6, einen Videodetektor 7, einen Videoverstärker 8 und eine Registriereinrichtung 9, die in Reihe geschaltet sind, angeschlossen.

An den Ausgang des Videoverstärkers 8 ist der Eingang eines Multivibrators 10 geschaltet, an dessen einen Ausgang der Steuereingang des elektronischen Schalters 5 und der Steuereingang eines elektronischen Schalters 11 und an dessen zweiten Ausgang der Steuereingang eines elektronischen Schalters 12 angeschlossen sind.

Der Empfangskanal enthält einen Frequenzteiler 13, dessen Ausgang an den Synchronisierimpulsgenerator 1 dessen erster Ausgang an den Eingang des Schalters 11 und dessen zweiter Ausgang an den Eingang eines Bildablenkgenerators 14 geschaltet sind. An den Ausgang des Schalters 11 ist ein Steuerspannungsgenerator 15 angeschlossen, der mit seinem Ausgang an die Sendepiezoelemente 4 angeschlossen ist.

Die Ausganäge der Registriereinrichtung 9 sind mit dem Ausgang des Bildablenkgenerators 14 und dem Ausgang des Zeilenablenkgenerators 16 verbunden.

Der Eingang des Schalters 12 ist an den Ausgang des Suchimpulsgenerators 2 angeschlossen und sein Ausgang mit dem Ausgang des Schalters 5 vereinigt.

Der Ausgang des Zeilenablenkgenerators 16 ist mit dem Ausgang des Synchronisierimpulsgenerator 1 verbunden.

An den Ausgang des Videodetektors 7 ist eine Ausgleichschaltung 17 für die Empfindlichkeit der Ultraschallkontrolle angeschlossen, deren Steuereingang mit dem Ausgang des Steuerspannungsgenerators 15 und deren Ausgang mit dem Eingang des Videoverstärkers 8 verbunden sind.

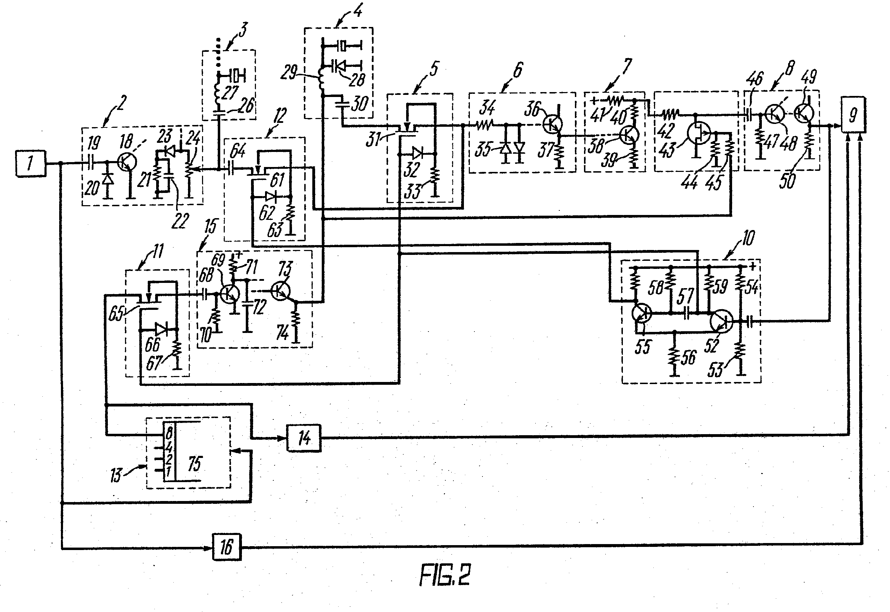

In Fig.2 ist der Schaltplan für einen Teil der Baugruppen des Defektoskops dargestellt.

Der Generator 2 enthält einen Transistor 18 (Fig.2), an dessen Basis ein Kondensator 19 und eine Diode 20 angeschlossen sind. Sein Ausgangsstromkreis umfaßt eine Parallelschaltung aus einem Widerstand 21 und einem Kondensator 22, an die über die Diode 23 ein Potentiometer 24 geschaltet ist. Der Schieber 25 des Potentiometers 24 ist über einen Trennkondensator 26 und eine Induktivität 27 mit dem ersten Sendepiezoelement 3 verbunden.

Das letztere Piezoelement 4 des Empfangskanals, zu dem eine Varicap 28 parallelgeschaltet ist, ist über die Induktivität 29 und den Trennkondensator 30 mit der Quelle eines Feldeffekttransistors 31 verbunden. Zwischen dem Gate und der Unterlage des Transistors 31 ist eine Diode 32 geschaltet, während die Unterlage über den Widerstand 33 an Erde gelegt ist. Die Senke des Transistors 31 ist über **einen** Widerstand 34 und Begrenzungsdioden 35 mit dem Eingang des HF-Impulsverstärkers 6 verbunden..

Die Ausgangsstufe des HF-Impulsverstärkers 6 stellt einen Emitterfolger dar, der aus einem Widerstand 36 mit einer Emitterbelastung 37 zusammengebaut ist. Der Ausgang des HF-Impulsverstärkers 6 ist mit dem Eingang des Videodetektors 7 verbunden. Der Emitter des Transistors 38 des Videodetektors 7 ist geerdet, während der Kollektor des Transistors 38 über in Reihe geschaltete Widerstände 40 und 41 an die Plusklemme der Speisequelle angeschlossen ist.

Der Ausgang des Videodetektors 7 ist über einen Widerstand 42 mit der Senke des Feldeffekttransistors 43 verbunden, während sein Gate über einen Widerstand 44 an Erde gelegt und über einen Widerstand 45 an den Ausgang des Steuerspannungsgenerators 15 angeschlossen ist. Die Senke des Feldeffektransistors 43 ist über einen Trennkondensator 46 mit der Basis des Transistors 48 des Videoverstärkers 8 verbunden, die über den Widerstand 47 an Erde gelegt ist. Der Emitter des Transistors 49 der Ausgangsstufe des Videoimpulsverstärkers 8 ist über den Widerstand 50 an Erde gelegt und mit dem Eingang der Registriereinrichtung 9 verbunden.

Der Emitter des Transistors 49 ist über einen Trennkondensator 51 auch an die Basis eines Transistors 52 des Multivibrators 10 angeschlossen. Die Basis des Transistors 52 ist über einen Widerstand 53 an Erde gelegt und über einen Widerstand 54 an die Plusklemme der Speisequelle angeschlossen. Die Emitter der Transistoren 52 und 55 sind zusammengeschaltet und über den Widerstand 56 an Erde gelegt. Die Basis eines Transistors 55 ist über den Trennkondensator 57 mit dem Kollektor des Transistors 52 und über einen Widerstand 58 mit der Plusklemme der Speisequelle verbunden. Der Kollektor eines Transistors 52 und der Kollektor eines Transistors 55 sind über einen Widerstand 59 bzw. einen Widerstand 60 mit der Plusklemme der Speisequelle verbunden.

Der Kollektor des Transistors 55 ist mit dem isolierten Gate eines Feldeffekttransistors 61 des Schalters 12 verbunden. Parallel zum Gate des Transistors 61 ist eine Diode 62 geschaltet, die über einen Widerstand 63 an Erde gelegt ist.

Die Quelle des Feldeffekttransistors 61 ist über einen Kondensator 64 mit dem Schieber 25 des Potentiometers 24 verbunden. Der Kollektor des Transistors 52 ist mit dem Gate des Feldeffekttransistors 31 und mit dem Gate eines Feldeffekttransistors 65 des Schalters 11 verbunden.

Parallel zu dem Gate und der Senke des Transistors 65 ist eine Diode 66 geschaltet, die über einen Widerstand 67 an Erden gelegt ist. Die Senke des Feldeffekttransistors 65 ist über einen Trennkondensator 68 mit der Basis eines Transistors 69 des Steuerspannungsgenerators 15 verbunden. Zwischen der Basis eines Transistors 69 und der Erde ist ein Widerstand 70 geschaltet. Der Kollektor des Transistors 69 ist über einen Widerstand 71 mit der Plusklemme der Speisequelle verbunden und über einen Kondensator 72 an Erde gelegt. Der Emitter eines Transistors 73 ist über einen Widerstand 74 an Erde gelegt und an die Induktivität 29 des Empfangswandlers 4 angeschlossen.

Die Quelle des Feldeffekttransistors 65 ist mit dem Ausgang einer Mikroschaltung 75 des Frequenzteilers 13 und mit dem Eingang des Bildablenkgenerators 14 verbunden, dessen Ausgang an die Registriereinrichtung 9 angeschlossen ist.

Die restlichen Baugruppen und Schaltungen des erfindungsgemäßen Ultraschalldefektoskops sind in an sich bekannter Weise ausgeführt.

Die Funktionsweise des Ultraschalldefektoskops ist folgende.

Der Generator 1 formiert eine Folge von Synchronisierimpulsen, die am Eingang des Suchimpulsgenerators 2 eintreffen. Die Suchimpulse kommen an den Sendepiezoelementen an, die einen breiten Strahl des Richtdiagramms 76 (Fig.3) formieren, mit dem das Prüfobjekt bestrahlt wird. In Abwesenheit der Echo-Signale vom Fehler arbeiten die Piezoelemente 3 nach einem vereinigten Schema, d.h. sie sind in ein und derselben Zeit Strahler und Empfänger der Ultraschallschwingungen. Beim Vorliegen eines Fehlers kommen die Echo-Signale über den elektronischen Schalter 12 am Eingang des HF-Impulsverstärkers 6 an, werden vom Videodetektor 7 demoduliert und gelangen vom Ausgang des Videoverstärkers 8 zum Eingang des monostabilen Multivibrators 10. Die Ausgangssignale des Multivibrators 10 sperren den Schalter 12 und entsperren die Schalter 5 und 11. Beim Entsperren des Schalters 11 kommen die Signale vom Ausgang des Frequenzteilers 13 zum Eingang des Steuerspannungsgenerators 15, dessen Signal die Lage des Strahls der Sendepiezoelemente 4 steuert.

Beim Sperren des Schalters 12 werden die Sendepiezoelemente 3 vom Eingang des Verstärkers 6 abgeschaltet und an diese die Empfangspiezoelemente 4 über den leitenden Schalter 5 geschaltet. In diesem Betriebszustand sind die Sendepiezoelemente 3 Strahler und die Empfangspiezoelemente 4 Empfänger für die Ultraschallschwingungen. Die Anzahl der Piezoelemente des Sendekanals (k) und des Empfangskanals (n) wird aus der Beziehung:

$$k = n \cdot \frac{\phi}{s}$$

gewählt, wo $\phi$ die Breite des Richtdiagramms des Satzes der Empfangspiezoelement 4 und S den Sektor der elektrischen Abtastung des Satzes der Empfangspiezoelemente 4 bedeutet. Bei einer solchen Wahl der Anzahl der Sendepiezoelemente 3 ist die Breite des Richtdiagramms 76 (Fig.3) des Satzes der Sendepiezoelemente 3 dem Sektor der elektrischen Abtastung des Satzes der Empfangspiezoelemente 4 gleichgesetzt.

Die Ausgleichschaltung 17 für die Empfindlichkeit der Ultraschallkontrolle, deren Spannungsübertragungsmaß eine Umkehrfunktion der Änderung in der Empfindlichkeit des Satzes der Empfangspiezoelemente 4 im Betriebszustand der elektrischen Abtastung ist, gestattet es, das Durchgangsübertragungsmaß des Empfangskanals bei der Abtastung konstant zu halten. Als Steuersignal für die Schaltung 17 dient die Steuerspannung vom Ausgang des Steuerspannungsgenerators 15.

Also wird das Defektoskop beim Entdecken eines Fehlers in einen anderen Durchschallungsbetrieb automatisch umgeschaltet, dabei erolgt die Einstrahlung mittels eines breiten nicht abtastenden Strahls (76) und der Empfang mittels eines schmalen abtastenden Strahls 77. Dies ermöglicht die Registrierung des Fehlers ab Zeitpunkt des Empfangs des Echo-Signals vom Fehler und die Erhaltung einer zweidimensionalen Abbildung des Fehlers an der Registriereinrichtung 9. Diese letztere läßt sich beispielsweise auf Basis eines Zweikoordinatenpotentiometers oder einer Elektronenstrahlröhre realisieren. Nach Beendigung des Empfangs des Echo-Impulses geht das Ultraschalldefektoskop automatisch in den ersten Durchschallungsbetrieb über.

Die Registrierung des Fehlers im Moment der Ankunft des Echo-Impulses vom Fehler erhöht die Sicherheit der Ultraschallprüfung im Vergleich zu den bekannten Ultraschalldefektoskopen. Darüber hinaus wird in dem erfindungsgemäßen Defektoskop im Unterschied zu den bekannten Defektoskopen mit elektrischer Abtastung, wo die Anzahl der Verstärker des Sendekanals und des Empfangskanals der Anzahl der Empfangsund der Sendepiezoelemente gleich ist, nur je ein Verstärker im Empfangskanal und im Sendekanal verwendet, was auch die Sicherheit der Ultraschallprüfung verbessert.

Gewerbliche Anwendbarkeit

Die Erfindung kann für die Ultraschalldefektoskopie von Schweißverbindungen und Kompaktheit des Werkstoffs von Metallkonstruktionen, im Maschinenbau, im Bau von energetischen Anlagen und Hauptrohrleitungen eingesetzt werden.

## PATENTANSPRÜCHE

1. Ultraschalldefektoskop, bei dem der Sendekanal für elektrische Signale einen Synchronisierimpulsgenerator (1) enthält, der an einen Suchimpulsgenerator (2) angeschlossen ist, welcher mindestens mit einem Sendepiezoelement (3) verbunden ist, und der Empfangskanal für elektrische Signale mindestens zwei Empfangspiezoelemente (4), die voneinander in einem Abstand angeordnet sind, der kleiner als die oder gleich der Ultraschallwellenlänge ist, und in Reihe geschaltet - einen HF-Impulsverstärker (6), einen Videodetektor (7), einen Videoverstärker (8) und eine Registriereinrichtung (9), welche mit einem Steuerspannungsgenerator (15) verbunden und mit den Empfangspiezoelementen (4) gekoppelt sind, sowie einen Zeilenablenkgenerator (16) enthält, der mit dem Synchronisierimpulsgenerator (1) und mit einem Frequenzteiler (13) verbunden ist, dessen Ausgang an einen Bildablenkgenerator (14) angeschlossen ist, dadurch gekennzeichnet, daß der Empfangskanal für elektrische Signale einen Multivibrator (10), dessen Eingang mit dem Ausgang des Videoverstärkers (8) verbunden ist, einen ersten elektronischen Schalter (11), dessen Steuereingang mit dem ersten Ausgang des Multivibrators (10), dessen Ausgang mit dem Frequenzteiler (13) und dessen Eingang mit dem Steuerspannungsgenerator (15) verbunden ist, einen zweiten elektronischen Schalter (12), dessen Steuereingang mit dem ersten Ausgang des Multivibrators (10), dessen Eingang mit dem Ausgang des Sendepiezoelementes (3) und dessen Ausgang mit dem Eingang des HF-Impulsverstärkers (6) verbunden ist, und einen dritten elektronischen Schalter (5), dessen Steuereingang an den zweiten Ausgang des Multivibrators (10), dessen Eingang an den Ausgang des Empfangspiezoelementes (4) und dessen Ausgang an den HF-Impulsverstärker (6) angeschlossen ist.

2. Ultraschalldefektoskop nach Anspruch 1, dadurch g e k e n n z e i c h n e t , daß es eine Ausgleichschaltung (17) für die Empfindlichkeit der Ultraschallkontrolle enthält, deren Eingang mit dem Ausgang des Videodetektors (7) und deren Ausgang mit dem Ausgang des Steuerspannungsgenerators (15) verbunden sind.

FIG.1

FIG.3

FIG.2

**I. CLASSIFICATION OF SUBJECT MATTER** (if several classification symbols apply, indicate all) ⁶

According to International Patent Classification (IPC) or to both National Classification and IPC

IPC⁴: G 01 N 29/04

**II. FIELDS SEARCHED**

Minimum Documentation Searched ⁷

| Classification System | Classification Symbols |
|---|---|
| IPC⁴ | G 01 N 29/00, 29/04 |

Documentation Searched other than Minimum Documentation
to the Extent that such Documents are Included in the Fields Searched ⁸

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| A | SU,A1, 1146595, (S.S. Fal, et al.) 23 March 1985 (23.03.1985), see column 2, lines 43-58, the drawing | 1 |
| A | SU,A1, 1170342, (E.L. Piletskas, et al.), 30 July 1985 (30.07.1985), see column 3, lines 30-50, the drawing | 1 |
| A | SU,A1, 1185230, (E.L. Piletskas, et al.), 15 October 1985 (15.10.1985), see column 2. lines 1-20 | 1 |
| A | SU,A1, 4542653, (Advanced Technology Laboratories Inc.) 24 September 1985, (24.09.1985), see column 6, lines 11-32, figure 4 | 1 |
| A | US,A, 4543829, (Siemens AG), 1 October 1985 (01.10.1985), see column 3, lines 45-65, figure 1 | 1 |
| | .../... | |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| 30 October 1986 (30.10.1986) | 12 January 1987 (12.01.1987) |
| International Searching Authority | Signature of Authorized Officer |
| ISA/SU | |

Form PCT/ISA/210 (second sheet) (January 1985)

## III. DOCUMENTS CONSIDERED TO BE RELEVANT    (CONTINUED FROM THE SECOND SHEET)

| Category * | Citation of Document, with indication, where appropriate, of the relevant passages | Relevant to Claim No |
|---|---|---|
| A | EP,A2, 0114595, (SIEMENS AKTIENGESELLSCHAFT) 1 August 1984, (01.08.1984), see page 9, lines 30-35, figure 2 | 1 |

-----------

Form PCT/ISA/210 (extra sheet) (January 1985)